**Europäisches Patentamt**

**European Patent Office**

**Office européen des brevets**

(19)

(11) Veröffentlichungsnummer: **0 078 553**
**B1**

(12) **EUROPÄISCHE PATENTSCHRIFT**

(45) Veröffentlichungstag der Patentschrift:
03.09.86

(51) Int. Cl.⁴: **B 32 B 31/30, B 65 D 65/38**

(21) Anmeldenummer: **82111038.4**

(22) Anmeldetag: **30.12.80**

(54) **Verwendung einer Verbundfolie als Verpackungsfolie.**

(30) Priorität: **09.01.80 DE 3000516**

(43) Veröffentlichungstag der Anmeldung:
**11.05.83 Patentblatt 83/19**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**DE-A-2 703 005**
**FR-A-2 171 507**
**US-A-3 744 664**

(73) Patentinhaber: **RB Kunststoffpatent- Verwertungs AG, c/o Dr. Franz Eng Westbahnhofstrasse 11, CH- 4500 Solothurn (CH)**

(72) Erfinder: **Belz, Roland Karl, Sonnenhalde 31, D-7022 Leinfelden- Echterdingen (DE)**

(74) Vertreter: **Patentanwälte Ruff und Beier, Neckarstrasse 50, D-7000 Stuttgart 1 (DE)**

EP 0 078 553 B1

## Beschreibung

Die Erfindung betrifft die Verwendung einer Verbundfolie als Verpackungsfolie.

Kunststoff-Folien werden wegen ihrer leichten Herstellbarkeit vor allem aber wegen ihrer völligen Dichtheit und Festigkeit auf dem Verpackungssektor in größtem Ausmaß eingesetzt. In entsprechendem Maße stellt ihre Vernichtung nach erfolgtem Gebrauch ein ernsthaftes Umweltproblem dar. Man hat deshalb Folienmaterialien entwickelt, die wenigstens eine Verbrennung ohne Bildung giftiger Gase erlauben.

Auf dem Hygienesektor gibt es papierähnliche Produkte, wie Papiertaschentücher, Toilettenpapier, Einmalhandtücher u. dgl., die nach dem Gebrauch in Wasser zerfallen. Doch besitzen diese weder die erfoderliche Dichtigkeit noch Festigkeit.

Aus der deutschen Offenlegungsschrift 27 03 005 ist eine Toilettensitzauflage bekannt, die von einer Seite her wasserfest ist, aber bei Zutritt von Wasser auf die andere Seite aufgelöst wird. Dies wird dadurch erreicht, daß eine Schicht der Folie aus einem in organischen Lösungsmitteln löslichen, in neutralen wässrigen Lösungen aber unlöslichen, in basischen oder sauren Medien aber lösbaren Material besteht und die andere Schicht aus wasserlöslichem, aber in dem organischen Lösungsmittel nicht löslichen Material, wobei in diese Schicht eine basische oder saure Substanz eingelagert ist. Bei der Herstellung dieser Toilettensitzauflage werden die einzelnen Schichten durch Aufbringen von Lösungen der Schichtmaterialien auf geeignete Unterlagen und Abdampfen der Lösungsmittel erhalten, wobei mit der wässrigen Lösung zu beginnen ist. Dieses Verfahren ist jedoch verhältnismäßig aufwendig, da die geeigneten Verdampfungseinrichtungen erforderlich sind und auch die Handhabung mit organischen Lösungsmitteln besondere Vorkehrungen erfordert. Außerdem hat sich gezeigt, daß die Versiegelungsschicht nicht die gewünschte Porenfreiheit besitzt, was darauf zurückzuführen ist, daß sich beim Verdunsten des Lösungsmittels aus dem Film der Versiegelungsschicht Bläschen bilden, die beim Trocknen Poren ergeben. Die Toilettensitzauflage besitzt eine sehr geringe mechanische Festigkeit. Das Folienmaterial der Toilettensitzauflage wäre daher für Verpackungszwecke nicht geeignet.

Der Erfindung liegt daher die Aufgabe zugrunde, eine Verpackungsfolie zu schaffen, die leicht vernichtbar ist und die an ein Verpackungsmaterial gestellten Anforderungen erfüllt.

Es wurde gefunden, daß thermoplastische Kunststoffe, die in saurem oder basischem Medium löslich sind, in im wesentlichen neutralen wässrigen Medium aber unlöslich sind, durch Extrusion zu Folien verarbeitet werden können und daß in solche Kunststoffe oder in wasserlösliche Kunststoffe Lösungsvermittler eingelagert und extrudiert werden können, die die in neutralen wäßrigen Medien unlöslichen Kunststoffe durch Veränderung des pH-Wertes lösbar machen. Trotz der ständigen Reaktionsbereitschaft zwischen Lösungsvermittler und Versiegelungsschicht wird eine für Verpackungszwecke geeignete Verbundfolie geschaffen.

Gegenstand des Stammpatentes EP-BI-0 032 244 (80 108 243.9), auf das Bezug genommen wird, ist eine Verbundfolie aus mindestens zwei Schichten, die von einer Seite her wasserfest und von der anderen Seite her wasserlöslich ist, wobei mindestens eine in Wasser normalerweise unlösliche, aber in saurem oder basischem Medium lösbare Versiegelungsschicht mit einer in Wasser löslichen Schicht verbunden ist und die Folie im Bereich der wasserlöslichen Schicht einen sauren bzw. basischen Lösungsvermittler für die Versiegelungsschicht enthält, die dadurch gekennzeichnet ist, daß die in Wasser an sich unlösliche Schicht aus einem extrudierbaren Thermoplast besteht und die in Wasser lösliche Schicht aus einem extrudierbaren wasserlöslichen Thermoplast oder einem in Wasser nicht löslichen, in saurem oder basischem Medium aber lösbaren extrudierbaren Thermoplast besteht und die Folie den sauren bzw. basischen Lösungsvermittler in einer Menge enthält, die zur Auflösung der in Wasser an sich unlöslichen Versiegelungsschicht und ggf. auch des in Wasser nicht löslichen Materials der wasserlöslichen Schicht ausreicht und die in Wasser normalerweise unlösliche Schicht als völlig dichte Extrusionsfolie ausgebildet ist.

Gegenstand der vorliegenden Erfindung ist die Verwendung einer solchen Verbundfolie als Verpackungsfolie.

Dadurch, daß die Versiegelungsschicht oder alle Schichten der Verbundfolie durch Extrusion gebildet sind, ist eine völlige Dichtheit von der Seite der Versiegelungsschicht her gewährleistet, da sich die einzelnen Folien porenfrei extrudieren lassen. Außerdem kann mit Hile eines Extruders die Schichtdicke der Einzelfolien wesentlich leichter variiert werden als dies bei der Herstellung der Einzelschichten aus Lösungen der Fall ist, wodurch sich der Aufbau der Verbundfolie und das Verhältnis der Materialstärken der einzelnen Schichten zueinander dem jeweiligen Verwendungszweck leicht anpassen lassen. Während beim Lösungs-Verfahren nach der deutschen Offenlegungsschrift 27 03 005 bei der Wahl des Materials für die einzelnen Schichten darauf geachtet werden mußte, daß unterschiedliche Löslichkeiten in den zur Herstellung der Schichten verwendeten Lösungsmittel vorlagen, um ein Auflösen einer bereits hergestellten Schicht beim Aufbringen der nächsten zu vermeiden, besteht dieses Problem beim "Trockenverfahren" nach der Erfindung nicht. Die Materialien für die einzelnen Schichten können vielmehr nach den Eigenschaften ausgesucht werden, die sie im fertigen Produkt haben sollen.

Für die erfindungsgemäße Verwendung gibt es zahlreiche Möglichkeiten auf dem Verpackungssektor. Die Beseitigung von nicht mehr brauchbaren Verpackungsmaterialien stellt heute ein erhebliches Problem dar. Dies kann durch die erfindungsgemäße Verwendung beseitigt werden, da die Verbundfolie nach Gebrauch in Wasser bzw. wäßrigen Lösungen aufgelöst werden kann und in ihrer Materialbeschaffenheit so zusammengesetzt werden kann, daß die dabei in Lösung gehenden Stoffe unschädlich bzw. umweltfreundlich sind.

Da die Verbundfolie aus thermoplastischen Materialien besteht, können die Verpackungen aus der Folie durch Verschweißen oder Versiegeln dicht verschlossen werden. Besonders vorteilhaft sind verschließbare bzw. verschlossene Beutel aus der Verbundfolie in Form von sog. Funktionspackungen, worauf später noch eingegangen wird. Dabei besitzen alle Verpackungsformen die Eigenschaft, daß sie sich beim Wegwerfen nach dem Gebrauch in wässrigem Milieu auflösen oder bei Zutritt von Feuchtigkeit, z. B. im Freien, innerhalb kurzer Zeit verrotten.

Die wasserlösliche Schicht kann dicker sein als die Versiegelungsschicht und kann dann die Tragefunktion übernehmen. Deshalb wird im folgenden die wasserlösliche Schicht in nicht einschränkender Weise auch als Trägerschicht bzw. Trägerfolie bezeichnet.

Als Material für die Versiegelungsschicht eignen sich solche Kunststoffe, die in Wasser und den üblicherweise vorkommenden neutralen wässrigen Lösungen nicht löslich sind, durch geeignete Lösungsvermittler, insbesondere Säuren oder Basen aber löslich gemacht werden können. Die Trägerfolie kann dagegen aus einem wasserlöslichen oder verzögert löslichen Kunststoff wie Hydroxypropylcellulose (Klucel J von Hercules Powder) bestehen. Es ist aber auch mit Vorteil möglich, für die Versiegelungsschicht und auch für die Trägerschicht denselben, an sich in Wasser nicht löslichen Kunststoff bzw. dieselbe Kunststoffmischung zu verwenden und den für die Trägerschicht verwendeten Kunststoff durch Einlagerung des Lösungsvermittlers löslich zu machen. Dabei muß es sich zumindest bei den Kunststoffen für die Versiegelungsschicht um solche handeln, die extrudierbar sind.

Bevorzugte Materialien für die Versiegelungsschicht sind Polymere, insbesondere Mischpolymere von ungesättigten organischen Säuren, wie Acrylsäure, Methacrylsäure und insbesondere Maleinsäureanhydrid. Erwähnt seien hier insbesondere wegen ihrer flexiblen Eigenschaften Copolymere von Maleinsäureanhydrid und Äthylvinyläther, insbesondere solche, die im Verhältnis 1: 1 hergestellt sind; weiterhin Copolymere aus Maleinsäureanhydrid, Methacrylat bzw. Terpolymere aus Maleinsäureanhydrid, Methacrylat und Butylacrylat; weiterhin Methacrylsäure- bzw. Acrylsäurecopolymere, insbesondere Copolymere von Acrylsäure mit Methacrylat. Dabei sind stets solche Polymere bevorzugt, die lösungsmittelfrei sind, insbesondere Blockpolymerisate.

So besteht vorzugsweise mindestens die Versiegelungsschicht aus einer thermoplastischen, in Wasser unlöslichen, jedoch in basischem Medium löslichen homopolymeren oder copolymeren Säure, insbesondere einer solchen, die unter Verwendung von Acrylsäure, Methacrylsäure, Crotonsäure und/oder Maleinsäure gewonnen ist. Die Versiegelungsschicht kann auch aus einer im basischen Medium löslichen copolymeren oder terpolymeren Säure bestehen, wobei als Comonomere bzw. Termonomere Vinyläther, Acrylate und Methacrylate bevorzugt sind. Auch Copolymere bzw. Terpolymere aus Maleinsäureänhydrid, wobei als Comonmere bzw. Termonomere bevorzugt Vinyläther, Acrylate und Methacrylate fungieren, sind geeignet. Als Trägerschicht kann andererseits auch ein thermoplastisches wasserlösliches Cellulosederivat verwendet werden. Bevorzugte Cellulosederivate sind Hydroxyäthylcellulose und Hydroxypropylcellulose.

Geeignete extrudierbare Kunststoffe sind auch feste Copolymerisate aus Vinylacetat und einem geringen Teil Crotonsäure, die als niedrigviskoses Polymerisat vorliegen und alkalilöslich sind. Ein derartiges Polymerisat wird beispielsweise unter der Bezeichnung Vinnapas C 305 von der Firma Wacker Chemie GmbH, München vertrieben. Ein weiteres geeignetes Produkt ist ein Ester aus Phthalsäure und Pentaerythrit in Form eines äthanol- und alkalilöslichen Hartharzes, wie es von der Firma BASF unter der Bezeichnung Phthalopal PP als Hartharz für die Herstellung von Papierlacken und Holzlacken vertrieben wird. Die Kunststoffe können in Form von Mischungen untereinander und mit Weichharzen, üblichen Weichmachern, Füllern und anderen Zusätzen vorliegen. Es hat sich herausgestellt, daß es besonders für die Versiegelungsschicht vorteilhaft sein kann, wenn sie noch gummielastische Zusätze enthält, was sich zur Erzielung der Rutschfestigkeit günstig auswirkt. Die gummielastischen bzw. kautschukartigen elastomeren Zusätze brauchen nicht durch den Lösungsvermittler lösbar zu sein. Da solche Zusätze die Elastizität der Folie erhöhen und ein Aneinanderkleben von Verbundfolien aneinander verhindern können, sind sie auch mit Vorteil in der Trägerschicht enthalten. Als Elastomer-Zusatz hat sich ein Anteil an Block-Copolymeren mit einer Polystyrol-Polybutadien-Polystyrol-Struktur als besonders bevorzugt erwiesen. Auch können die einzelnen Schichten der Verbundfolie aus Mischungen von Kunststoffen bestehen.

Als Lösungsvermittler zum Auflösen der Versiegelungsschicht kommen insbesondere wasserlösliche Carbonate, sekundäre und tertiäre Phosphate, insbesondere Triammoniumphosphat, Silicate, Borate und Amine, insbesondere Triäthanolamin in Betracht. Die Mitverwendung von sog. Sprengmitteln, die bei Kontakt mit Wasser stark aufquellen oder Gase erzeugen, kann ebenfalls von Vorteil sein. Ein solches Sprengmittel ist beispielsweise Natriumcarboxymethylcellulose (Nymcel ZSB 10 von Nyma). Dabei wird bei sämtlichen Materialien für die Verbundfolie vorzugsweise darauf geachtet, daß sie umweltfreundlich sind, wie dies bei den oben genannten Produkten weitgehend der Fall ist.

Die der Versiegelungsschicht abgewandten Seite der Folie kann eine textile Beschichtung aus Einzelfasern aufweisen, die in der Folienoberseite verankert oder mit dieser verklebt sind. Dabei kann die Länge der Fasern, die in begrenztem Maße untereinander verfilzt sind, im Bereich von ca. 0,01 bis 2 mm oder höher liegen. Die Fasern bringen eine mechanische Verstärkung der Folie und verhindern deren Zusammenschrumpfen und Verkleben. Trotzdem läßt sich die Folie nach ihrem Gebrauch völlig auflösen, da die Fasern zwar in gewisser Weise miteinander verfilzt, aber nicht bleibend miteinander verbunden sind. Als Fasern werden vorzugsweise solche aus Cellulose, insbesondere Baumwolle verwendet. Aber auch andere Faserstoffe sind geeignet.

Die Versiegelungsschicht und die nächstfolgende und ggf. weitere Schichten sind vorzugsweise flächig miteinander verbunden, insbesondere verschweißt. Sie können jedoch auch durch Anlösen der einen und/oder der anderen Oberfläche oder mit Hilfe eines Klebers verklebt sein. Die Versiegelungsschicht und die Trägerschicht bestehen vorzugsweise aus einem in Wasser normalerweise unlöslichen Kunststoff, wobei die Trägerschicht zusätzlich lösungsvermittelnde Zusätze für sich und die Versiegelungsschicht enthält. Dabei können diese Zusätze in der Trägerschicht gleichmäßig verteilt oder im Grenzbereich zur Versiegelungsschicht in höherer Konzentration vorliegen. Dies hängt in der Regel davon ab, wie dick die Versiegelungsschicht ist und wie leicht sich die Unlöslichkeit in Wasser mit Hilfe des Lösungsvermittlers in eine Löslichkeit umwandeln läßt. Die Trägerschicht kann, wenn sie aus einem in Wasser lösbaren Material, wie Hydroxypropylcellulose besteht, auch frei von lösungsvermittelnden Zusätzen sein, wobei dann eine zusätzliche Zwischenschicht vorgesehen sein kann, die die lösungsvermittelnden Zusätze enthält und zwischen Versiegelungsschicht und Trägerschicht angeordnet ist.

Da die Versiegelungsschicht nicht selbsttragend zu sein braucht, kann sie in der Regel sehr dünn gehalten werden, da sich gezeigt hat, daß eine Schichtdicke von 1 bis 5 µm, insbesondere 2 bis 3 µm bereits völlig ausreicht, um die gewünschte Dichtigkeit zu erzielen. In der Regel liegt daher die Schichtdicke der Versiegelungsschicht unter 10 µm. Die Dicke der Trägerschicht hängt davon ab, wieviel weitere Schichten die Verbundfolie noch enthält und welche mechanischen Belastungen sie aushalten soll. Insbesondere dann, wenn außer der Versiegelungsschicht keine weitere Kunststoffschicht vorgesehen ist, die Trägerschicht aber mit einem Textilbelag versehen ist, liegt ihre Schichtdicke in der Regel zwischen ca. 5 bis 50, insbesondere 10 bis 12 µm.

Die Maleinsäureanhydrid-Copolymere ergeben nach der Hydrolyse ähnliche Produkte wie die in großem Umfang als Flockungshilfsmittel bei der Klärschlammaufbereitung verwendeten Polymeren auf Acrylsäurebasis. Sie sind daher im Abwasser ebenso wenig schädlich wie die Acrylsäure-Copolymeren.

Das Cellulosederivat Klucel ist nach Herstellerangaben in toxikologischer Hinsicht ebenso einzuschätzen wie gereinigte Cellulose.

Die als Lösungsvermittler einsetzbaren Carbonate, Phosphate, Silikate, Borate und Triäthanolamin sind Bestandteile von Waschmitteln, ebenso das Sprengmittel Klucel, das auch als Flockungshilfsmittel eingesetzt werden kann.

Bei einer bevorzugten Verwendung besitzt die Folie die Form eines Sackes, einer Tüte, eines Beutels, einer Tragtasche o. dgl., wobei die Wandung jeweils so ausgebildet ist, daß sie sowohl an ihrer Innen- als auch an ihrer Außenseite eine Versiegelungsschicht aufweist. Dies kann dadurch erreicht werden, daß zu Bildung einer Wandung jeweils zwei Verbundfolien so aufeinander gelegt werden, daß ihre wasserlöslichen Seiten einander zugewandt sind und die Versiegelungsschichten nach außen weisen. Auf diese Weise sind die Säcke und dergleichen feuchtigkeitsunempfindlich. Werden die Säcke dagegen nach ihrem Gebrauch mechanisch aufgerissen, dann kann Wasser zwischen die wasserlöslichen Schichten der Folie gelangen, so daß sich die Folien und damit die Säcke u. dgl. auflösen können. Es ist aber auch möglich, die Verbundfolie so auszubilden, daß eine wasserlösliche Trägerschicht beidseitig mit einer Versiegelungsschicht versehen ist. Nach einer mechanischen Zerstörung ist auch diese Folie völlig auflösbar, da das Wasser zwischen den Versiegelungsschichten in die Folie eindringen und die Trägerschicht und danach die Versiegelungsschichten lösen kann. Bei dieser Verwendungsform ist es weiterhin möglich die Trägerschicht im Inneren porös auszubilden oder mit einer saugfähigen Einlage zu versehen, wodurch das Eindringen von Wasser in die Trägerschicht begünstigt und damit der Auflösevorgang beschleunigt wird.

Wie oben bereits erwähnt, hängt die Dicke und die Zusammensetzung der Trägerschicht im wesentlichen von den gewünschten Eigenschaften, insbesondere von der mechanischen Festidkeit der Verbundfolie ab. Die Dicke der Trägerschicht bzw. der Trägerschichten kann dabei bis zu 0,5 mm oder gar bis 1 mm betragen, wobei hier keine Grenzen gesetzt sind. Auch können in die Schichten oder zwischen die Schichten noch Verstärkungen eingelegt sein, wobei vorzugsweise darauf geachtet wird, daß die Verstärkungen ihrerseits beim Auflösevorgang leicht zerfallen, wie dies beispielsweise bei Einzelfasern der Fall ist. Die Verbundfolie kann an der löslichen Seite und/oder an der Versiegelungsschicht einen textilen Belag besitzen. Weiterhin ist es möglich, z. B. für schlauchförmige Verpackungen, die erfindungsgemäße Verbundfolie in Form einer Schlauchware oder Blasfolie herzustellen, wozu es lediglich erforderlich ist, entsprechende ringförmige Extruderdusen vorzusehen.

Die physikalischen und auch die chemischen Eigenschaften der einzelnen Schichten der Verbundfolie können dadurch variiert werden, daß für diese Schichten Kunststofformulierungen verwendet werden, deren Zusammensetzung in entsprechender Weise variiert wird. Die Auflösungsgeschwindigkeit der einzelnen Schichten kann durch das Verhältnis des Säureanteils im Copolymeren bzw. Terpolymeren zum Anteil an Comonomeren bzw. Termonomeren sowie zusätzlich durch Art und Gehalt des Lösungsvermittlers in der Trägerschicht bestimmt werden. Weiterhin kann die Auflösungsgeschwindigkeit für die Verbundfolie dadurch vermindert werden, daß weniger gut lösliche oder nicht gut lösliche Stoffe in disperser Phase oder in gelöster Form in die Materialien der einzelnen Schichten eingelagert werden. Falls erwünscht, können in die eine und/oder andere Schicht auch die Klebrigkeit erhöhende Zusätze eingelagert werden.

So hat es sich als vorteilhaft erwiesen, einen nicht trocknenden Haftkleber einzumischen (z. B. Lutonal M 40), um die erwünschte Klebrigkeit für eine Beflockung mit Textilfasern zu erzeugen. Natürlich können zur Beschichtung mit den Textilfasern auch zusätzliche Kleber verwendet werden, wie z. B. Polyvinylpyrrolidon, die auf die mit den Fasern zu belegende Oberflächenschicht aufgebracht werden.

Weitere Merkmale der Erfindung ergeben sich aus der folgenden Beschreibung von bevorzugten Verwendungsformen in Verbindung mit der Zeichnung und den Ansprüchen.

In der Zeichnung zeigt

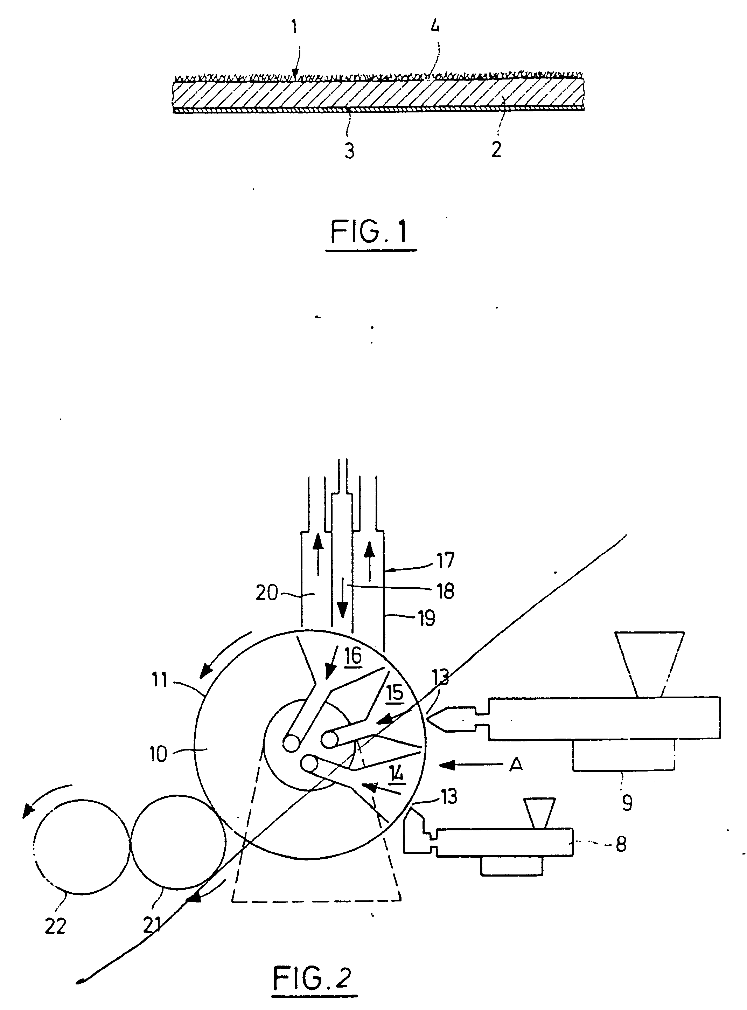

Fig. 1 einen Querschnitt durch eine Verbundfolie nach der Erfindung,

Die in Fig. 1 dargestellte Verbundfolie 1 ist aus drei Schichten aufgebaut. Eine Trägerschicht 2 mit einer Stärke von ca. 10 bis 12 µm besteht aus einem in basischem Medium löslichen Copolymeren aus Maleinsäureanhydrid und Äthylvinyläther. Zusätzlich kann die Trägerschicht noch Weichmacher, Weichharze und/oder andere Zusätze enthalten. Die Trägerschicht ist aufgrund eines Gehaltes an basischem Lösungsvermittler, wie Dinatriumphosphat wasserlöslich, da bei Einwirkung von Wasser das Milieu infolge der Auslösung des Lösungsvermittlers basisch wird und dadurch die Trägerschicht aufzulösen vermag. Die Unterseite der Trägerschicht ist mit einer nur ca. 2 bis 3 µm starken, völlig porenfreien Versiegelungsschicht 3 aus demselben Material wie die Trägerschicht 2 versehen, das hier allerdings keinen eingelagerten Lösungsvermittler enthält, weshalb die Versiegelungsschicht in neutralen wässrigen Lösungen unlöslich ist. Die beiden Schichten sind vollflächig miteinander verschweißt bzw. verklebt. An ihrer der Versiegelungsschicht 3 abgewandten Seite weist die Trägerschicht 2 einen Belag 4 aus textilen Fasern auf, die in der Trägerschicht 2 verankert sind und über den größten Teil ihrer Länge frei an der Oberfläche liegen. Bei den Fasern handelt es sich um Cellulosefasern mit einer Länge von ca. 0,1 bis 1 mm. Der Belag aus den Textilfasern hat verschiedene Aufgaben. So verhindert er, daß die verhältnismäßig dünne Verbundfolie bei der Handhabung zusammenschrumpft und die Flächen aneinander haften bleiben, wie dies bei dünnen Folien vielfach der Fall ist.

Weiterhin hat der Belag wärmeisolierende Eigenschaften und vermag außerdem eine gewisse Feuchtigkeit aufzunehmen, ohne daß dadurch die Verbundfolie angelöst wird. Die Verbundfolie ist vollständig wasserlöslich, wobei eine Auflösung jedoch nur dann erfolgen kann, wenn Wasser an der Seite der Verbundfolie angreift, an der sie mit dem textilen Belag versehen ist. Dort ist nämlich das Copolymerisat wegen des eingelagerten Lösungsvermittlers, wie oben erwähnt, wasserlöslich. Da bei der Auflösung der Trägerschicht 2 und des Lösungsvermittlers ein basisches Medium gebildet wird, wird die dünne Versiegelungsschicht von diesem Medium mit aufgelöst. Kommt dagegen Wasser lediglich an die Oberfläche der Versiegelungsschicht 3, dann vermag dieses Wasser die Versiegelungsschicht nicht anzugreifen, so daß die gesamte Verbundfolie unangegriffen bleibt.

Die Verbundfolie kann für Verpackungszwecke mit besonderem Vorteil überall dort eingesetzt werden, wo ein Schutz vor Feuchtigkeit und Nässe gewünscht ist und andererseits eine umweltfreundliche Beseitigung des verbrauchten Materials angestrebt wird. Die Folie kann mit großem Vorteil auch zu einem Funktionsbeutel geformt sein. Hat ein solcher Beutel die Versiegelungsschicht an der Außenseite, dann eignet er sich zum Aufbewahren von Stoffen, die trocken sind oder die wasserlösliche Trägerschicht nicht zu lösen vermögen. Öffnet man den Beutel und bringt ihn mit Wasser zusammen, dann löst er sich auf und gibt seinen Inhalt frei. Ist die Versiegelungsschicht innen, dann können in dem Beutel wäßrige, nicht alkalisch wirkende Stoffe aufbewahrt werden, z. B. Badezusätze u. dgl. Wird der noch geschlossene Beutel mit seiner wasserlöslichen Außenseite in Wasser gegeben, löst er sich auf und gibt seinen Inhalt frei.

Die Erfindung ist nicht auf die hier beschriebene Verwendungsform beschränkt. Es sind vielmehr zahlreiche Abwandlungen möglich, ohne daß der Rahmen der Erfindung verlassen wird. So kann auch eine Verbundfolie hergestellt werden, die für ihre Verwendung als Verpackungsmaterial wesentlich dickere Schichten aufweist. Auch ist es möglich, die Verbundfolie aus mehreren Schichten herzustellen, wobei einzelne Schichten nicht vollflächig mit der nächsten verbunden sind, sondern Ausbauchungen mit Luftpolstereinlagen besitzen, wie dies bei tiefgezogenen Polstermaterialien der Fall ist.

## Beispiele

Im folgenden werden einige Beispiele für die Herstellung von Copolymeren und Termonomeren für die Versiegelungsschicht aufgeführt, wobei diese Polymere, wenn sie mit basischen Stoffen vermischt sind, auch als Material für die Trägerschicht verwendet werden können. Als die Löslichkeit in Basen bewirkendes Monomer ist Maleinsäureanhydrid bevorzugt, wobei es in einem Molverhältnis von ca. 1: 1 mit dem Comonomeren verwendet wird. Bei Terpolymeren werden Mengen an den beiden anderen Comonomeren so gewählt, daß die Summe dieser Comonomere wiederum ein Molverhältnis von 1: 1 mit Maleinsäureanhydrid ergibt. Als Comonomere werden bei Copolymeren vorzugsweise Methacrylat oder Äthylacrylat sowie Äthylvinyläther und bei Terpolymeren zusätzlich Butylacrylat verwendet.

Die Polymerisation wird in üblicher Weise unter Verwendung von Radikalbildnern, z. B. Peroxyden, als Katalysatoren bei Temperaturen zwischen Raumtemperatur und 150° C, vorzugsweise zwischen Raumtemperatur und 100° C durchgeführt. Als Polymerisationsverfahren sind die lösungsmittelfreie Polymerisation und die Emulsionspolymerisation bevorzugt. Einige Eigenschaften der so erhaltenen Copolymere und Terpolymere ergeben sich aus der nachfolgenden Tabelle. Zur Bildung der Trägerschicht können die Polymere mit bis zu 15 Gewichtsprozent an basischer Substanz vermischt werden, wobei solche bevorzugt sind, die einen weichmachenden Effekt haben, wie z. B. verschiedene Amine.

5

# Herstellung und Charakterisierung von Maleinsäureanhydrid-Copolymeren

(Abkürzungen auf gesondertem Blatt)

| Nr. | Comonomere I | II | Katalysator % a) | LM | Molverhältnis MSA | I | II | Polymerisations -temp. °C | -zeit h | Löslichkeit b) WAS | NaOH 1 | 3 | 10 | PHOS 1 | 3 | 10 | Fließbereich c) °C | Filme |
|---|---|---|---|---|---|---|---|---|---|---|---|---|---|---|---|---|---|---|
| 38 | EVE | | LAP | 0,1 | BEN | 1 | 1 | | 70 | 6 | 1 | | | 4 | | | 4 | 240E | flexibel |
| 39 | EVE | | LAP | 0,1 | SUB | 1 | 1 | | 70 | 6 | 1 | | | 3 | | | 4 | 240E | flexibel |
| 49 | MAC | | | | ACE | 1 | 1 | | 80 | 7 | 1 | | | 4 | | | 4 | 220E | flexibel, etwas klebrig |
| 51 | MAC | | | | BEN | 1 | 1,2 | | 80 | 6 | 1 | | | 3 | | | 4 | | flexibel, etwas klebrig |
| 68 | MAC | BAC | CHC | 0,1 | SUB | 1 | 0,6 | 0,4 | 60 | 7 | 1-2 | 4 | 4 | 4 | 4 | 4 | 4 | 220-230 | flexibel |
| 69 | MAC | BAC | CHC | 0,1 | SUB | 1 | 0,5 | 0,5 | 60 | 7 | 1-2 | 2 | 3 | 3 | 2 | 3 | 3 | | flexibel |

a) bezogen auf Monomerengemisch

b) 1/3/10: 1 bzw. 3 bzw. 10%ige Lösungen
   24 N-Beurteilung: 1 = unlöslich; 2 = quillt; 3 = lansam löslich; 4 = schnell löslich

c) gemessen auf der Koflerbank; E = nur Erweichung

LM = Lösungsmittel
MSA = Maleinsäureanhydrid
WAS = Wasser
PHOS = Triammoniumphosphat
EVE = Äthylvinyläther
MAC = Methylacrylat
BAC = n-Butylacrylat
SUB = Substanz (lösungsmittelfrei)
ACE = Aceton
BEN = Benzol
LAP = Laurylperoxid
CHC = Bis (4-tertiärbutylcyclohexyl)peroxidicarbonat (Perkadox 16)

**Patentansprüche**

1. Verwendung einer Verbundfolie aus mindestens zwei Schichten (2, 3) aus thermoplastischem Material, die von einer Seite her wasserfest und von der anderen Seite her wasserlöslich ist, wobei mindestens eine in Wasser normalerweise unlösliche, aber in saurem oder basischem Medium lösbare Versiegelungsschicht (3) mit einer in Wasser löslichen Schicht (2) verbunden ist und die Folie (1) im Bereich der wasserlöslichen Schicht (2) einen sauren bzw. basischen Lösungsvermittler für die Versiegelungsschicht enthält, die in Wasser an sich unlösliche Schicht (3) aus einem extrudierbaren Thermoplast besteht und die in Wasser lösliche Schicht (2) aus einem extrudierbaren wasserlöslichen Thermoplast oder einem in Wasser nicht löslichen, in saurem oder basischem Medium aber lösbaren, extrudierbaren Thermoplast besteht und die Folie (1) den sauren bzw. basischen Lösungsvermittler in einer Menge enthält, die zur Auflösung der in Wasser an sich unlöslichen Versiegelungsschicht (3) und ggf. auch des in Wasser nicht löslichen Materials der wasserlöslichen Schicht (2) ausreicht und die in Wasser normalerweise unlösliche Schicht (3) als völlig dichte Extrusionsfolie ausgebildet ist, als Verpackungsfolie.

2. Verwendung einer Verbundfolie nach Anspruch 1, dadurch gekennzeichnet, daß die in Wasser normalerweise unlösliche Versiegelungsschicht (3) und die in Wasser lösliche Schicht (2) aus demselben, in Wasser an sich unlöslichen thermoplastischen Kunststoff bestehen.

3. Verwendung einer Verbundfolie nach Anspruch 1 oder 2, dadurch gekennzeichnet, daß die wasserlösliche Schicht (2) einen basischen Lösungsvermittler mindestens für die aus einem in basischem Medium löslichen Thermoplasten bestehende wasserunlösliche Versiegelungsschicht (3) enthält, wobei als Lösungsvermittler Carbonate, sekundäre und tertiäre Phosphate, Silicate, Borate, Amine und insbesonder Trialkanolamine bevorzugt sind.

4. Verwendung einer Verbundfolie nach einem der Ansprüche 1 bis 3, dadurch gekennzeichnet, daß die lösungsvermittelnden Zusätze im Grenzbereich zwischen der wasserlöslichen Schicht (2) und der Versiegelungsschicht (3) in erhöhter Konzentration vorliegen.

5. Verwendung einer Verbundfolie nach einem der vorhergehenden Ansprüche, dadurch gekennzeichnet, daß zwischen der wasserlöslichen Schicht (2) und der an sich in Wasser unlöslichen Versiegelungsschicht (3) eine die lösungsvermittelnden Zusätze enthaltende Zwischenschicht vorgesehen ist.

6. Verwendung einer Verbundfolie nach einem der vorhergehenden Ansprüche, dadurch gekennzeichnet, daß mindestens die wasserunlösliche Versiegelungsschicht (3) aus einer thermoplastischen, in Wasser unlöslichen, jedoch in basischem Medium löslichen homopolymeren oder copolymeren Säure besteht, insbesondere einer solchen, die unter Verwendung von Acrylsäure, Methacrylsäure, Crotonsäure und/oder Maleinsäure gewonnen ist.

7. Verwendung einer Verbundfolie nach einem der Ansprüche 1 bis 6, dadurch gekennzeichnet, daß mindestens die wasserunlösliche Versiegelungsschicht (3) aus einer im basischen Medium löslichen copolymeren oder terpolymeren Säure besteht, wobei als Comonomere bzw. Termonomere Vinyläther, Acrylate und Methacrylate bevorzugt sind.

8. Verwendung einer Verbundfolie nach einem der Ansprüche 1 bis 7, dadurch gekennzeichnet, daß mindestens die wasserunlösliche Versiegelungsschicht (3) aus einem Copolymeren bzw. Terpolymeren aus Maleinsäureanhydrid besteht, wobei als Comonomere bzw. Termonomere Vinyläther, Acrylate und Methacrylate bevorzugt sind.

9. Verwendung einer Verbundfolie nach einem der vorhergehenden Ansprüche, dadurch gekennzeichnet, daß mindestens die wasserfeste Versiegelungsschicht (3) aus durch lösungsmittelfreie Polymerisation hergestellten Polymeren besteht.

10. Verwendung einer Verbundfolie nach einem der vorhergehenden Ansprüche, dadurch gekennzeichnet, daß mindestens die wasserfeste Versiegelungsschicht (3) aus als Flockungshilfsmittel verwendbaren Copolymeren besteht.

11. Verwendung einer Verbundfolie nach einem der Ansprüche 1 oder 3 bis 10, dadurch gekennzeichnet, daß die wasserlösliche Schicht (2) aus einem thermoplastischen wasserlöslichen Cellulosederivat, insbesondere Hydroxyäthylcellulose oder Hydroxypropylcellulose besteht.

12. Verwendung einer Verbundfolie nach einem der vorhergehenden Ansprüche, dadurch gekennzeichnet, daß die Verbundfolie in Form einer Bahn, eines Schlauches oder eines Beutels vorliegt.

13. Verwendung einer Verbundfolie nach einem der vorhergehenden Ansprüche, dadurch gekennzeichnet, daß die Verbundfolie in Form von zwei Einzelfolien vorliegt, deren wasserlösliche Seiten (2) einander zugewandt sind und deren Versiegelungsschichten (3) die Außenseite bilden.

14. Verwendung einer Verbundfolie nach Anspruch 13, dadurch gekennzeichnet, daß die wasserlöslichen Seiten (2) lose aneinander liegen.

15. Verwendung einer Verbundfolie nach Anspruch 13, dadurch gekennzeichnet, daß die wasserlöslichen Seiten (2) über eine selbst durch Wasser lösbare poröse Zwischenschicht miteinander verbunden sind.

16. Verwendung einer Verbundfolie nach einem der Ansprüche 1 bis 12, dadurch gekennzeichnet, daß eine poröse Schicht aus wasserlöslichem Material beidseitig mit einer Schicht (3) aus an sich in Wasser nicht löslichem Material versehen ist.

17. Verwendung einer Verbundfolie nach einem der Ansprüche 1 bis 12, dadurch gekennzeichnet, daß die Verbundfolie aus mehreren Schichten besteht, wobei einzelne Schichten nicht vollflächig mit der nächsten verbunden sind, insbesondere daß sie mindestens drei Schichten aufweist und zwei dieser Schichten aus wasserlöslichem Material bestehen, die nach Art einer Luftpolster-Verbundfolie mit eingeschweißten Luftkissen ausgebildet sind.

18. Verwendung einer Verbundfolie nach einem der vorhergehenden Ansprüche, dadurch gekennzeichnet, daß die thermoplastischen Kunststoffe ohne Verwendung von Lösungsmitteln hergestellte Polymere sind.

19. Verwendung einer Verbundfolie nach einem der vorhergehenden Ansprüche, dadurch gekennzeichnet, daß die Verbundfolie bei der Klärschlamm-Aufbereitung verwendbare Flockungshilfsmittel enthält, insbesondere hydrolisierbare Polymere, die solche Flockungshilfsmittel ergeben.

**Claims**

1. Use of a multilayer sheet comprising at least two layers (2, 3) of thermoplastic material, which is waterproof from one side and water-soluble from the other side, at least one sealing layer (3), which is normally insoluble in water, but soluble in an acid or basic medium is joined to a water-soluble layer (2) and in the vicinity of the water-soluble layer (2), sheet (1) contains an acid or basic solubilizer for the sealing layer, the water-insoluble layer (3) comprises an extrudable thermoplastic material and the water-soluble layer (2) comprises an extrudable water-soluble thermoplastic material or a water-insoluble, but basic or acid medium-soluble, extrudable thermoplastic material and the sheet (1) contains the acid or basic solubilizer in a quantity adequate for dissolving the water-insoluble sealing layer (3) and optionally also the water-insoluble material of the water-soluble layer (2) and the normally water-insoluble layer (3) is in the form of a completely tight extruded sheet, as a packaging sheet.

2. Use of a multilayer sheet according to claim 1, characterized in that the normally water-insoluble sealing layer (3) and the water-soluble layer (2) are made from the same water-insoluble thermoplastic material.

3. Use of a multilayer sheet according to claims 1 or 2, characterized in that the water-soluble layer (2) contains a basic solubilizer at least for the water-insoluble sealing layer (3) comprising a thermoplastic material soluble in the basic medium, preferred solubilizers being carbonates, secondary and tertiary phosphates, silicates borates, amines and particularly trialkanol amines.

4. Use of a multilayer sheet according to one of the claims 1 to 3, characterized in that the solubilizing additives are present in increased concentration in the boundary region between the water-soluble layer (2) and the sealing layer (3).

5. Use of a multilayer sheet according to one of the preceding claims, characterized in that an intermediate layer containing the solubilizing additives is provided between the water-soluble layer (2) and the water-insoluble sealing layer (3).

6. Use of a multilayer sheet according to one of the preceding claims, characterized in that at least the water-insoluble sealing layer (3) is obtained from a thermoplastic, water-insoluble, but basic medium-soluble, homopolymeric or copolymeric acid, particularly one obtained by using acrylic, methacrylic, crotonic and/or maleic acid.

7. Use of a multilayer sheet according to one of the claims 1 to 6, characterized in that at least the waterinsoluble sealing layer (3) comprises a basic medium-soluble copolymeric or terpolymeric acid, preferred comonomers or termonomers being vinyl ethers, acrylates and methacrylates.

8. Use of a multiplayer sheet according to one of the claims 1 to 7 characterized in that at least the water-insoluble sealing layer (3) comprises a copolymer or terpolymer of maleic anhydryde, preferred comonomers or termonomers being vinyl ethers, acrylates and methacrylates.

9. Use of a composite sheet according to one of the preceding claims, characterized in that at least the waterproof sealing layer (3) comprises polymers produced by solvent-free polymerization.

10. Use of a composite sheet according to one of the preceding claims, characterized in that at least the waterproof sealing layer (3) comprises copolymers usable as flocculation aids.

11. Use of a composite sheet according to one of the claims 1 or 3 to 10, characterized in that the water-soluble layer (2) comprises a thermoplastic, water-soluble cellulose derivative, particularly hydroxyethylcellulose or hydroxypropylcellulose.

12. Use of a multilayer sheet according to one of the preceding claims, characterized in that the multilayer sheet is in the form of a web, a hose or a bag.

13. Use of a multilayer sheet according to one of the preceding claims, characterized in that the multilayer sheet is in the form of two individual sheets, whose water-soluble sides (2) face one another and whose sealing layers (3) form the outside.

14. Use of a multilayer sheet according to claim 13, characterized in that the water-soluble sides (2) loosely engage on one another.

15. Use of a multilayer sheet according to claim 13, characterized in that the water-soluble sides (2) are joined together by a porous intermediate layer, which is itself soluble by water.

16. Use of a multilayer sheet according to one of the claims 1 to 12, characterized in that a porous layer of water-soluble material is provided on either side with a layer (3) of a water-insoluble material.

17. Use of a multilayer sheet according to one of the claims 1 to 12, characterized in that the multilayer sheet comprises several layers, individual layers not being joined in full surface manner with the next, particularly in that it has at least three layers and two of these layers are made from water-soluble material, which are constructed in the manner of an air cushion multilayer sheet with bonded in air cushions.

18. Use of a multilayer sheet according to one of the preceding claims, characterized in that the thermoplastic materials are polymers produced without using solvents.

19. Use of a multilayer sheet according to one of the preceding claims, characterized in that the multilayer sheet contains flocculation aids usable in sewage sludge treatment and in particular hydrolizable polymers giving such flocculation aids.

**Revendications**

Utilisation, en tant que feuille d'emballage, d'une feuille composite comprenant au moins deux couches (2, 3) en une matière thermoplastique qui est resistante à l'eau sur une face et sont hydrosoluble sur l'autre face, au moins une couche de scellement (3) normalement insoluble dans l'eau, mais soluble en milieu acide ou basique, étant reliée a une couche (2) soluble dans l'eau; la feuille (1) renfermant, au voisinage de la couche hydrosoluble (2), un agent de solubilisation respectivement acide ou basique pour la couche de scellement; la couche (3) par elle-même insoluble dans l'eau consistant en une matière thermoplastique extrudable et la couche (2) soluble dans l'eau consistant en une matière thermoplastique extrudable hydrosoluble, ou en une matière thermoplastique extrudable non soluble dans l'eau, mais soluble en milieu acide ou basique; la feuille (1) renfermant l'agent de solubilisation respectivement acide ou basique en une quantité suffisant pour provoquer la dissolution de la couche de scellement (3) par elle-meme insoluble dans l'eau et, éventuellement aussi, du matèriau non soluble dans l'eau de la couche hydrosoluble (2); et la couche (3) normalement insoluble dans l'eau étant réalisée sous la forme d'une feuille extrudée entierement étanche.

2. Utilisation d'une feuille composite selon la revendication 1, caractérisée par le fait que la couche de scellement (3) normalement insoluble dans l'eau et la couche (2) soluble dans l'eau sont constituées par la même matière thermoplastique en soi insoluble dans l'eau.

3. Utilisation d'une feuille composite selon la revendication 1 ou 2, caractérisée par le fait que la couche hydrosoluble (2) renferme un agent basique de solubilisation au moins pour la couche de scellement (3) insoluble dans l'eau et consistant en une matière thermoplastique soluble en milieu basique, l'agent de solubilisation étant préférentiellement formé par des carbonates, des phosphates secondaires et tertiaires, des silicates, des borates, des amines et en particulier des trialcanolamines.

4. Utilisation d'une feuille composite selon l'une des revendications 1 à 3, caractérisée par le fait que les additifs provoquant une solubilisation sont présents en concentration accrue dans la zone limite entre la couche hydrosoluble (2) et la couche de scellement (3).

5. Utilisation d'une feuille composite selon l'une des revendications précédentes, caractérisée par le fait qu'une couche intermédiaire, renfermant les additifs provoquant une solubilisation, est prévue entre la couche hydrosoluble (2) et la couche de scellement (3) par elle-même insoluble dans l'eau.

6. Utilisation d'une feuille composite selon l'une des revendications précédentes, caractérisée par le fait qu'au moins la couche de scellement (3) insoluble dans l'eau consiste en un acide d'homopolymère ou de copolymère thermoplastique insoluble dans l'eau, mais soluble en milieu basique, un tel acide en partuculier obtenu par utilitsation d'acide acrylique, d'acide méthacrylique, d'acide crotonique et/ou d'acide maléique.

7. Utilisation d'une feuille composite selon l'une des revendications 1 à 6, caractérisée par le fait qu'au moins la couche de scellement (3) insoluble dans l'eau consiste en un acide de copolymère ou de terpolymère soluble en milieu basique, les comonomères ou termonomeres consistant respectivement, de préférence, en du vinyléther, des acrylates et des méthacrylates.

8. Utilisation d'une feuille composite selon l'une des revendications 1 à 7, caractérisée par le fait qu'au moins la couche de scellement (3) insoluble dans l'eau consiste respectivement en un copolymère ou en un terpolymère à base d'anhydrite d'acide maléique, les comonomères ou termonomeres consistant respectivement, de préférence, en du vinyléther, des acrylates et des méthacrylates.

9. Utilisation d'une feuille composite selon l'une des revendications précédentes, caractérisée par le fait qu'au moins la couche de scellement (3) résistant à l'eau est constituée par des polymères produits par polymérisation sans solvants.

10. Utilisation d'une feuille composite selon l'une des revendications précedentes, caractérisée par le fait qu' au moins la couche de scellement (3) resistant à l'eau consiste en des copolymères pouvant être utilisés en tant qu'auxiliaires de floculation.

11. Utilisation d'une feuille composite selon l'une des revendications 1 ou 3 à 10, caractérisée par le fait que la couche hydrosoluble (2) consiste en un dérivé de cellulose thermoplastique hydrosoluble, en particulier de l'hydroxyéthylcellulose ou de l'hydroxypropylcellulose.

12. Utilisation d'une feuille composite selon l'une des revendications précédentes, caractérisée par le fait que cette feuille composite se présente sous la forme d'une bande, d'un boyau ou d'une pochette.

13. Utilisation d'une feuille composite selon l'une des revendications précédentes, caractérisée par le fait que cette feuille composite se présente sous la forme de deux feuilles individuelles, dont les faces hydrosolubles (2) sont tournées l'une vers l'autre et dont les couches de scellement (3) forment la face externe.

14. Utilisation d'une feuille composite selon la revendication 13, caractérisée par le fait que les faces hydrosolubles (2) reposent avec jeu l'une sur l'autre de façon lâche.

15. Utilisation d'une feuille composite selon la revendication 13, caractérisée par le fait que les faces hydrosolubles (2) sont reliées mutuellement par l'entremise d'une couche intermédiaire poreuse, pouvant elle-même être dissoute par l'eau.

16. Utilisation d'une feuille composite selon l'une des revendications 1 à 12, caractérisée par le fait qu'une couche poreuse en un matériau soluble dans l'eau est pourvue, de part et d'autre, d une couche (3) d'un matériau par lui-même insoluble dans l'eau.

17. Utilisation d'une feuille composite selon l'une des revendications 1 à 12, caractérisée par le fait que cette feuille composite comprend plusieurs couches, des couches individuelles n'étant pas reliées par toute leur superficie à la couche suivante; et notamment par le fait qu'elle présente au moins trois couches et deux de ces couches consistent en un matériau hydrosoluble, en étant réalisées à la manière d'une feuille composite à rembourrage d'air et à coussins d'air emprisonnés par soudage.

18. Utilisation d'une feuille composite selon l'une des revendications précédentes, caractérisée par le fait que les matières thermoplastiques sont des polymères produits sans utilisation de solvants.

19. Utilisation d'une feuille composite selon l'une des revendications précédentes, caractérisée par le fait que la feuille composite renferme des auxiliaires de floculation utilisables lors du traitement des boues de curage, en particulier des polymères hydrolysables qui donnent de tels auxiliaires de floculation.

FIG.1

FIG.2

1